# EUROPÄISCHE PATENTSCHRIFT

(11) **EP 2 607 686 B1**
(45) Veröffentlichungstag und Bekanntmachung des Hinweises auf die Patenterteilung: **14.06.2017**
(21) Anmeldenummer: 12191409.7
(22) Anmeldetag: 06.11.2012
(51) Int. Cl.: F03D 3/04

(54) **Vorrichtung zur Erzeugung elektrischer Energie aus dem Fahrtwind**
Device for generating electrical energy from the airstream
Dispositif de production d'énergie électrique à partir du vent reçu lors de la conduite

(30) Priorität: 22.12.2011 DE 102011121941
(43) Veröffentlichungstag der Anmeldung: 26.06.2013
(73) Patentinhaber: AeRa Technologies GmbH, 86156 Augsburg (DE)
(72) Erfinder: Barreto de Pinho, Marcello, 86316 Wulfertshausen-Friedberg (DE); Prißler, Timo, 86154 Augsburg (DE)
(74) Vertreter: Charrier Rapp & Liebau

(56) Entgegenhaltungen:
- WO-A1-03/101774
- DE-A1- 10 307 632
- DE-A1-102008 005 553
- DE-A1-102008 064 513
- US-A1- 2004 047 732

## Beschreibung

Die Erfindung betrifft eine Vorrichtung zur Erzeugung elektrischer Energie aus dem Fahrtwind eines Kraftfahrzeugs.

Aus dem Stand der Technik ist es in vielfacher Weise bekannt, den Fahrtwind eines Kraftfahrzeugs wieder in elektrische Energie zu verwandeln, um so die Batterien aufzuladen und/oder die Reichweite eines Hybrid-Fahrzeugs zu erhöhen. So beschreibt die DE 10 2007 032 843 A1 einen Walzen-Windgenerator zur Stromerzeugung, welcher sich beispielsweise auch im bewegten Verkehr an der Bremsstauhaube eines Lastkraftwagens anbringen lässt.

Die DE 24 24 578 A1 zeigt ein Verfahren und eine Vorrichtung zur Erzeugung und Speicherung elektrischer Energie mit Hilfe eines außerhalb an einem Kraftfahrzeug angeordneten Propellers bzw. Windrades.

Die DE 30 38 879 A1 hat ebenfalls einen windbetriebenen Stromerzeuger für Elektrofahrzeuge zum Gegenstand und geht in ihrem Offenbarungsgehalt nicht über die vorgenannte Druckschrift hinaus.

Gegenstand der DE 31 07 167 A1 ist ein Antrieb für Elektrofahrzeuge mit Einleiten von Fahrtwind auf eine Windturbine zum Aufladen der Batterien. Die Windturbine wird zum Beispiel als sogenanntes Jackson-Windrad auf dem Dach des Fahrzeugs befestigt.

Die DE 32 02 884 A1 zeigt einen Windkraftgenerator zur Gewinnung elektrischer Energie, dessen Einsatz auch zur Ausnutzung des Fahrtwindes von Kraftfahrzeugen beschrieben ist.

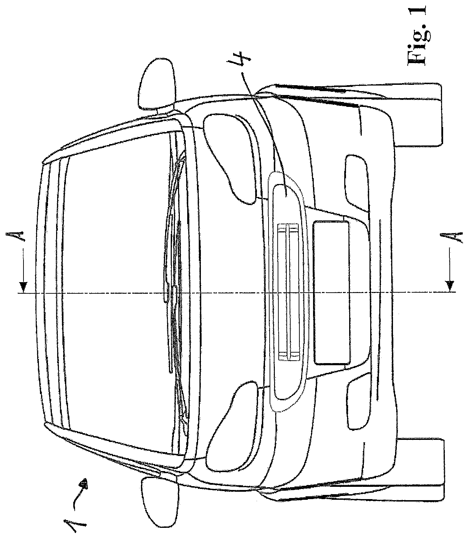

Die DE 32 26 381 A1 hat eine Antriebseinrichtung für ein Elektroauto zum Gegenstand, wobei die Windräder, welche die Energie zur Aufladung der Batterien erzeugen ausweislich der Fig. 1 im Front-Karosseriebereich des Fahrzeugs angeordnet sind.

Die DE 39 07 861 A1 hat die Gewinnung und Speicherung elektrischer Energie, ebenfalls über einen Windkraftgenerator, zum Gegenstand.

Das Gleiche gilt für die DE 199 57 431 A1.

Weitere Druckschriften, insbesondere die DE 10 2006 052 668 A1, die DE 10 2007 013 885 A1, die DE 10 2007 032 843 A1 (hier ebenfalls die Funktion innerhalb der Bremsstauhaube), die DE 10 2008 005 553 A1 und die DE 10 2009 056 309 A1, die DE 20 2005 009 215 U1, die DE 20 2007 009 555 U1, die DE 20 2007 010 984 U1, die DE 20 2008 005 070 U1, die DE 20 2008 007 436 U1, die DE 20 2008 012 018 U1, die DE 20 2008 012 145 U1, die DE 20 2008 015 733 U1 und die DE 20 2009 013 425 U1 zeigen weitere Anordnungen zur Erzeugung elektrischer Energie aus dem Fahrtwind von Kraftfahrzeugen in den verschiedensten Bauweisen und an den verschiedensten Orten.

Die in den genannten Druckschriften gezeigten Vorrichtungen sind teilweise ineffizient und nicht optimal auf die verschiedenen Fahrgeschwindigkeiten eines Kraftfahrzeugs ausgelegt und beeinflussen andererseits das harmonische, äußere Erscheinungsbild des Kraftfahrzeugs.

Die DE 103 07 632 A1 zeigt eine Vorrichtung zur Regelung des Kühlluftdurchsatzes, hat jedoch nichts mit einem elektrischen Windgenerator zu tun. Diese Druckschrift befasst sich nur mit der Zuführung von Kühlluft auf den Kühler, nicht aber mit dem Problem der Optimierung des Betriebs eines elektrischen Windgenerators.

Die GB 2 334 701 A zeigt einen zu öffnenden oder zu schließenden Kühlergrill, der je nach Bedarf entweder geöffnet oder vollständig geschlossen werden kann.

Schließlich zeigt die DE 10 2007 054 789 A1 eine Fahrzeugkleinwindkraftanlage mit zylindrischen Windradelementen zur Ausnutzung des Fahrtwinds.

Gegenstand der US 2004/0047732 A1 ist eine Vorrichtung zur Gewinnung elektrischer Energie aus dem Fahrtwind eines Kraftfahrzeugs unter Verwendung eines dem Fahrtwind ausgesetzten Walzen-Windgenerators, welcher innerhalb der geschlossenen Karosserie des Kraftfahrzeugs, in Fahrtrichtung gesehen, hinter dessen Kühlergrill angeordnet ist, wobei zwischen dem Kühlergrill und dem Windgenerator Lamellen angeordnet sind, welche die dem Windgenerator zugeführten Fahrtwind abhängig von der Geschwindigkeit des Kraftfahrzeugs beeinflussen können.

Die Druckschriften WO03/010774 A1, DE 103 07 632 A1, DE 10 2008 005 553 A1 und DE 10 2008 064 513 A1 offenbaren verschiedene Windgeneratoren bzw. Kühlergrillanordnungen mit Regelungen des Kühlluftdurchsatzes, wobei auch verstellbare Lamellen vorgesehen sind, mit denen eine Anpassung des Luftdurchsatzes an verschiedene Fahrgeschwindigkeiten ermöglicht wird.

Es besteht die Aufgabe, eine verbesserte Vorrichtung bereit zu stellen, welche auch bei verschiedensten Fahrzeuggeschwindigkeiten effizient arbeitet und nicht überlastet wird. Gelöst wird diese Aufgabe mit den kennzeichnenden Merkmalen des Anspruchs 1. Eine vorteilhafte Ausgestaltung ist dem Unteranspruch 2 entnehmbar.

Ein Ausführungsbeispiel der Erfindung wird im Folgenden unter Bezugnahme auf die begleitenden Zeichnungen näher erläutert. Diese zeigen:
- **Fig. 1:**: eine Vorderansicht eines mit einer entsprechenden Vorrichtung ausgerüsteten Kraftfahrzeugs;
- **Fig. 2:**: einen Schnitt durch das in Figur 1 dargestellte Kraftfahrzeug entlang der Linie A-A;
- **Fig. 3:**: eine vergrößerte Darstellung des in Fig. 2 mit einem Kreis umrahmten Details bei geöffneten Lamellen;
- **Fig. 4:**: eine Darstellung gemäß Fig. 3 bei teilweise geschlossenen Lamellen.

In Figur 1 ist ein bekannter Kleinwagen in der Forderansicht dargestellt. Dieser Kleinwagen weist neben den üblichen Karosserie- und Ausstattungselementen den mit der Bezugsziffer 4 bezeichneten Kühlergrill auf, durch welchen in an sich bekannter Weise der Fahrtwind in die dahinterliegenden, zu kühlenden Kraftfahrzeugteile eintritt.

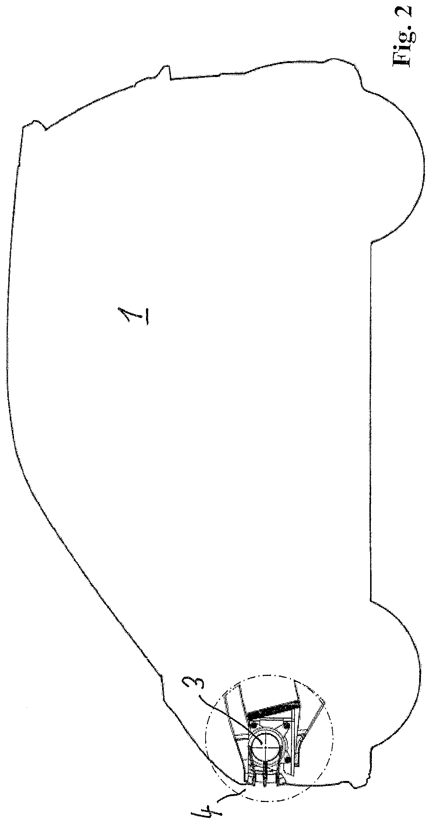

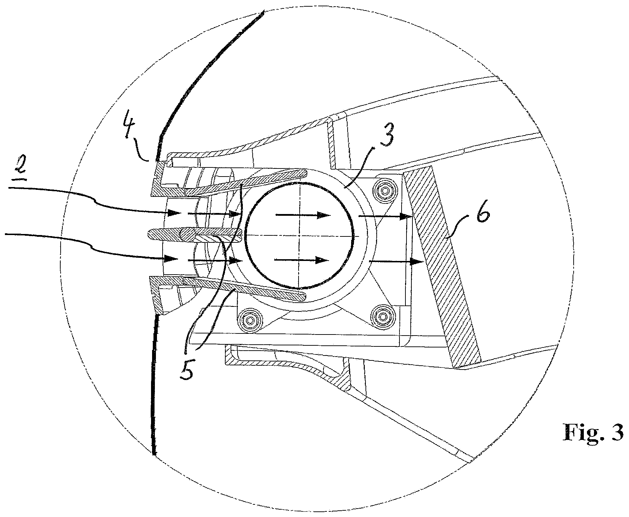

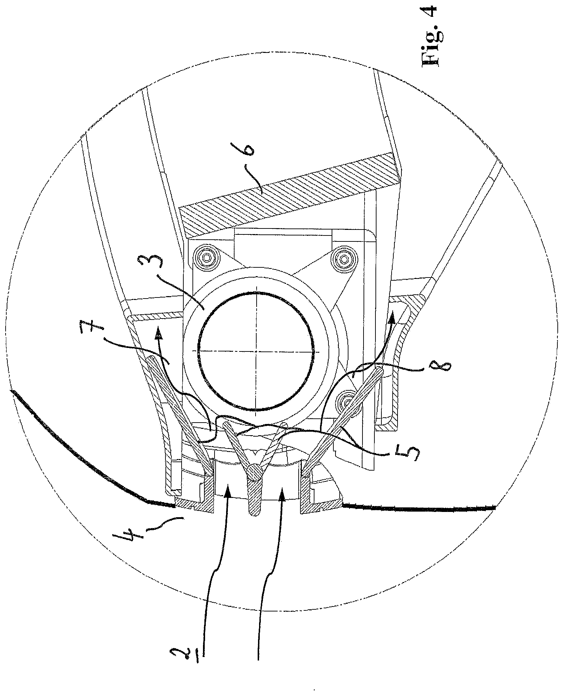

Figur 2 zeigt einen mittigen Schnitt durch das in Figur dargestellte Kraftfahrzeug entlang der in Figur 1 dargestellten Linie A-A. In Figur 2 ist in dem strichpunktierten Kreis das Detail mit dem Kühlergrill 4 und einem dahinterliegenden Walzen-Windgenerator 3 dargestellt. Die Figur dient nur der Erläuterung der Anordnung des Walzen-Windgenerators 3 hinter dem Kühlergrill 4 des Kraftfahrzeugs 1. Weitere Details innerhalb des strichpunktierten Kreises aus Figur 2 sind in den Figuren 3 und 4 dargestellt.

Beide Figuren 3 und 4 zeigen, von der Richtung des Fahrtwindes 2 aus gesehen, dessen Durchtritt durch den Kühlergrill 4, sodann durch die Lamellen 5 und anschließend auf den Walzen-Windgenerator 3. Sodann trifft der Fahrtwind auf den hinter dem Walzen-Windgenerator 3 angeordneten serienmäßigen Kühler des Kraftfahrzeugs 1 auf. Insoweit unterscheidet sich die Anordnung gemäß Figur 4 nicht von der Anordnung gemäß Figur 3.

Die Anordnung gemäß Figur 3 ist bei niedriger Geschwindigkeit des Kraftfahrzeugs 1 vorteilhaft, die Anordnung gemäß Figur 4 bei höherer Geschwindigkeit. Beide Anordnungen unterscheiden sich durch die Stellung der Lamellen 5 voneinander.

Während in der Anordnung gemäß Figur 3 der gesamte eintreffende Fahrtwind 2 auf den Walzen-Windgenerator 3 und anschließend auf den Kühler 6 geleitet wird, was durch eine gerade Stellung der Lamellen 5 erfolgt, sind die Lamellen 5 in Figur 4 so eingestellt, dass zwei zusätzliche Kanäle 7 und 8 entstehen, durch welche der Fahrtwind an dem Walzen-Windgenerator 3 und an dem Kühler 6 vorbeigeleitet wird. Dies erfolgt durch Spreizung der beiden inneren (kürzeren) Lamellen 5 unter Bildung eines "V" sowie seitliche Ablenkung der beiden äußeren Lamellen, wodurch der Fahrtwind 2 in die seitlich neben dem Walzen-Windgenerator 3 verlaufenden Umlenkkanäle 7 und 8 geleitet wird. Selbstverständlich trifft auch bei dieser Anordnung noch ein Teil des Fahrtwinds auf den Walzen-Windgenerator 3. Jedoch genügt aufgrund der in Figur 4 höheren Geschwindigkeit des Kraftfahrzeugs 1 ein geringerer Anteil des Fahrtwinds 2, um den Walzen-Windgenerator 3 auf ausreichende Drehzahl zu bringen.

Abweichend zur oben beschriebenen Konstruktion können die Drehachsen der Lamellen auch an der oberen, inneren Kante des Kühlergrills oder in der unteren, inneren Kante des Kühlergrills angeordnet sein. Eine weitere Variante besteht darin, die Lamellen in der senkrechten Ausrichtung anzuordnen. Diese Varianten sind zeichnerisch jedoch nicht dargestellt.

Wie aus Figur 3 ersichtlich, treibt der Fahrtwind 2 nach Durchtritt durch den Kühlergrill 4 zunächst unmittelbar den Walzen-Windgenerator 3 an. Dieser wird in Drehung versetzt und erzeugt in an sich bekannter Weise elektrische Energie, die, vorzugsweise über eine dahinterliegende Schaltung, der Aufladung der Batterie des Kraftfahrzeugs 1 dient und dieser zugeführt wird. Alternativ können auch andere Batterien oder elektrische Verbraucher bedient werden. Schließlich dient der Fahrtwind 2 in an sich bekannter Weise der Kühlung des Kühlers 6 des Kraftfahrzeugs 1.

Sobald sich die Geschwindigkeit des Fahrzeugs erhöht, können die Lamellen 5 kontinuierlich geöffnet werden, bis hin zu der in Figur 4 dargestellten Anordnung. Zwar wird bei dieser Anordnung der Walzen-Windgenerator 3 noch immer angetrieben, jedoch nur noch mit einem Bruchteil des Fahrtwindes 2, während der Rest des Fahrtwindes 2 über die Umlenkkanäle 7 und 8 an dem Walzen-Windgenerator 3 vorbeigeleitet wird, so dass dieser nicht überlastet wird und auf eine Drehzahl beschränkt bleibt, in der der Walzen-Windgenerator 3 seinen optimalen Wirkungsgrad erbringt.

Die erfindungsgemäße Lösung hat gegenüber den aus dem Stand der Technik bekannten Lösungen den erheblichen Vorteil, dass sie klein und kompakt zwischen dem Kühlergrill 4 und dem Kühler 6 eines Kraftfahrzeugs 1 integrierbar ist, wobei zusätzlich mit der Lamellenanordnung 5 noch eine Anpassung der Leistung des Systems an die Geschwindigkeit des Kraftfahrzeugs 1 möglich ist.

## Patentansprüche

1. Vorrichtung zur Gewinnung elektrischer Energie aus dem Fahrtwind (2) eines Kraftfahrzeugs (1) unter Verwendung eines dem Fahrtwind (2) ausgesetzten Walzen-Windgenerators (3), wobei der Walzen-Windgenerator (3) innerhalb der geschlossenen Karosserie des Kraftfahrzeugs (1), in Fahrtrichtung gesehen, hinter dessen Kühlergrill (4) angeordnet ist und zwischen dem Kühlergrill (4) und dem Windgenerator (3) verstellbare Lamellen (5) angeordnet sind, **dadurch gekennzeichnet, dass** die verstellbaren Lamellen (5) von einer geraden Stellung, in welcher der gesamte eintreffende Fahrtwind (2) auf den Walzen-Windgenerator (3) geleitet wird, durch Spreizung der inneren Lamellen (5) unter Bildung eines "V" sowie seitliche Ablenkung der äußeren Lamellen so einstellbar sind, dass der Fahrtwind teilweise in seitlich neben dem Walzen-Windgenerator (3) verlaufende Umlenkkanäle (7,8) geleitet wird.

2. Vorrichtung nach Anspruch 1, **dadurch gekennzeichnet, dass** die von dem Walzen-Windgenerator (3) erzeugte elektrische Energie einer Schaltung zur Aufladung der Batterie des Kraftfahrzeugs (1) zuführbar ist.

## Claims

1. Device for generating electrical energy from the airstream (2) of a motor vehicle (1), using a roller-type wind generator (3) exposed to the airstream, wherein the roller-type wind generator (3) is arranged inside the closed body of the motor vehicle (1), behind its radiator grille (4) as seen in the direction of travel, and between the radiator grille (4) and the wind generator (3) are arranged adjustable slats (5), **characterised in that** the adjustable slats (5) are adjustable from a straight position in which all of the incoming airstream (2) is conducted onto the roller-type wind generator (3), by moving the inner slats (5) apart, forming a "V", and lateral deflection of the outer slats, in such a way that the airstream is partially conducted into deflection channels (7, 8) which run laterally adjacent to the roller-type wind generator (3).

2. Device according to claim 1, **characterised in that** the electrical energy generated by the roller-type wind generator (3) can be delivered to a circuit for charging the battery of the motor vehicle (1).

## Revendications

1. Dispositif servant à produire de l'énergie électrique à partir du vent lié au déplacement (2) d'un véhicule automobile (1) en utilisant un générateur éolien à cylindres (3) exposé au vent lié au déplacement (2), dans lequel le générateur éolien à cylindres (3) est disposé à l'intérieur de la carrosserie fermée du véhicule automobile (1), vu dans la direction de déplacement, derrière la calandre de radiateur (4) de celui-ci et des lamelles (5) ajustables sont disposées entre la calandre de radiateur (4) et le générateur éolien (3), **caractérisé en ce que** les lamelles (5) ajustables peuvent être réglées depuis une position droite, dans laquelle la totalité du vent lié au déplacement (2) entrant est acheminée sur le générateur éolien à cylindres (3), par l'écartement des lamelles (5) intérieures en formant un « V » ainsi qu'en déviant latéralement les lamelles extérieures de telle sorte que le vent lié au déplacement est acheminé en partie dans des canaux de renvoi (7, 8) s'étendant latéralement à côté du générateur éolien à cylindres (3).

2. Dispositif selon la revendication 1, **caractérisé en ce que** l'énergie électrique générée par le générateur éolien à cylindres (3) peut être amenée à un circuit servant à recharger la batterie du véhicule automobile (1).
